# EUROPEAN PATENT APPLICATION

(11) **EP 4 645 763 A1**
(43) Date of publication of application: **05.11.2025**
(21) Application number: 24305684.3
(22) Date of filing: 30.04.2024
(51) Int. Cl.: H04L 9/40, G06F 3/16, H04L 67/125

(54) **METHOD FOR MANAGING A VOICE COMMAND**

(71) Applicant: THALES DIS FRANCE SAS, 92190 Meudon (FR)
(72) Inventor: SHEN, Mao Tian, Singapore 470118 (SG); DY SY, Jenny, Singapore 151116 (SG); GONDOKARJONO, Witjaksono, Singapore 650534 (SG); DALISTAN, Maria Louella Young, Singapore 398504 (SG); WANG, Tao, Singapore 542261 (SG); LEE JUN YING, Marcus, Singapore 603288 (SG)
(74) Representative: Grevin, Emmanuel

(57) **Abstract**

The invention is a method for sending a voice command (42) to a receiver (30) through an acoustic channel and comprising the steps:
- a companion device (20) gets a first trigger data (41) from a user (10),
- the receiver receives from the companion device a start signal indicating beginning of a secured period,
- the receiver receives the voice command from the user,
- the receiver receives additional signals (A01, ... A0n) sent by the companion device during the secured period,
- the companion device receives a second trigger data (43) from the user,
- the receiver receives from the companion device an end signal generated by the companion device upon receipt of the second trigger data and indicating the end of the secured period,
- upon receipt of the end signal, the receiver performs a check of the additional signals to accept or refuse the voice command.

## Description

### (Field of the invention)

The present invention relates to methods for managing a voice command. It relates particularly to methods of sending a voice command to a voice receiver through an acoustic channel.

### (Background of the invention)

Voice assistants are more and more deployed and used for a large number of activities. Users simply provide their command by speaking to systems that recognize what is requested.

Artificial intelligence systems are becoming widespread and can be used for dishonest purposes, including imitating a person's voice. A fake voice can pose a security threat when attempting to improperly access certain services that should remain private or restricted.

### (Summary of the Invention)

There is a need to increase the security of management of voice commands.

The invention aims at solving the above-mentioned technical problem.

An object of the present invention is a method for sending a voice command to a voice receiver through an acoustic channel. The method comprises the following steps:
- a companion device gets a first trigger data from a user of the voice receiver,
- the voice receiver receives a start signal from the companion device, said start signal indicating a start of a secured period,
- the voice receiver receives, through the acoustic channel, the voice command emitted by the user,
- the voice receiver receives a set of additional signals sent by the companion device during the secured period,
- the companion device receives a second trigger data from the user,
- the voice receiver receives an end signal from the companion device, said end signal being generated by the companion device upon receipt of the second trigger data and indicating an end of the secured period, and
- upon receipt of the end signal, the voice receiver performs a check of the set of additional signals and accepts or refuses the voice command according to said check.

Advantageously, the voice receiver may be a voice assistant which executes the voice command only if the check is successful.

Advantageously, the voice receiver may transfer the voice command to a coupled apparatus or identify a specific command by executing the voice command and send said specific command to the coupled apparatus.

Advantageously, the coupled apparatus may be a car, a television, a coffee machine, a house shutter, a private safe, a phone, a computer machine, a home automation appliance, a robot or a weapon.

Advantageously, upon receipt of the second trigger data, the companion device may generate a signature by using specific data reflecting characteristics intrinsic to the set of additional signals and the voice receiver may check the signature when performing the check of the set of additional signals.

Advantageously, the companion device may capture a sound level of the voice command emitted by the user and generate said signature by using the sound level.

Advantageously, the companion device may generate a random value, send the set of additional signals according to random intervals depending on the random value, and include the random value in one of the signals sent to the voice receiver and the voice receiver may use the received random value for performing the check of the set of additional signals.

Advantageously, the voice receiver may receive the start signal, the set of additional signals and the end signal through the acoustic channel.

Advantageously, the voice receiver may receive the set of additional signals in the form of MORSE code.

Advantageously, the voice receiver may receive the set of additional signals through an acoustic channel using a frequency inaudible to the human ear.

Advantageously, the voice receiver may receive the start signal, the set of additional signals and the end signal through a Bluetooth or Wi-Fi communication channel.

Another object of the present invention is a system comprising a voice receiver able to receive a voice command emitted by a user through an acoustic channel. The system comprises a companion device configured to get a first trigger data from the user. The companion device is configured to send to the voice receiver a start signal indicating a start of a secured period. The companion device is configured to send to the voice receiver a set of additional signals during the secured period. The companion device is configured to send an end signal to the voice receiver upon receipt of the second trigger data provided by the user, said end signal indicating an end of the secured period. Upon receipt of the end signal, the voice receiver is configured to perform a check of the set of additional signals, and to accept or refuse the voice command according to said check.

Advantageously, upon receipt of the second trigger data, the companion device may be configured to generate a signature by using specific data reflecting characteristics intrinsic to the set of additional signals and the voice receiver may be configured to check the signature when performing the check of the set of additional signals.

Advantageously, the companion device may embed a first button used to get the first trigger data from the user and a second button used to get the second trigger data.

Advantageously, the companion device may embed a motion sensor that is configured to interpret a first type of movement as the first trigger data and a second type of movement as the second trigger data.

### (Brief description of the drawings)

Other characteristics and advantages of the present invention will emerge more clearly from reading the following description of a number of preferred embodiments of the invention with reference to the corresponding accompanying drawings in which:
- Fig. 1 shows an exemplary flow diagram for managing a voice command according to the invention; and
- Fig. 2 shows a diagram of architecture of a system for managing a voice command according to an example of the invention.

### (Detailed description of the preferred embodiments)

The invention may apply to any type of apparatus designed to receive a command through an acoustic channel. Such apparatus may be intended to received commands from a single particular person or from a person belonging to a group of people authorized to control the apparatus.

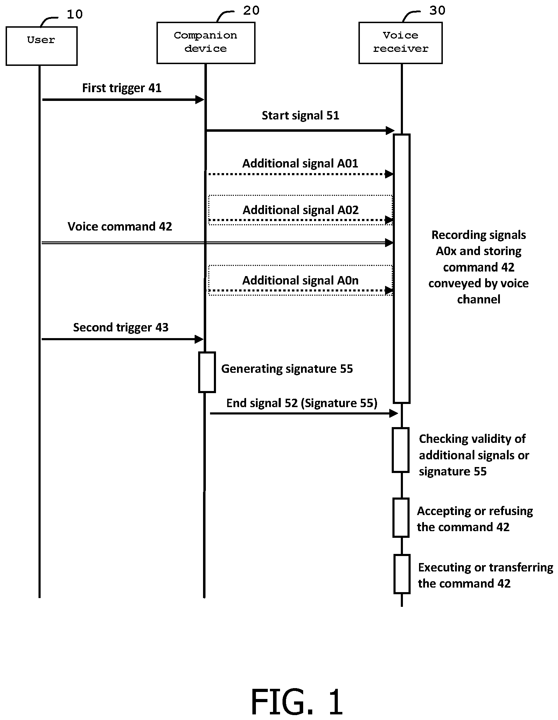

Figure 1 depicts an exemplary flow diagram for managing a voice command according to a first example of the invention.

In this example, a genuine user 10 (i.e. an individual) wants to send a command to the voice receiver 30. The voice receiver can be a voice assistant, or a voice unit coupled to one or more other appliances that the user wishes to control or pilot. For instance, the voice receiver can be coupled to a plurality of home automation devices.

The user 10 owns a companion device 20 which is a portable hardware device. The companion device 20 may have a form factor similar to a smart card, a remote-control box, a ring or a keychain for example.

Let's assume that the user 10 wants to activate a specific feature of the voice receiver 30.

First, the user triggers the companion device 20, for example by pressing a button or shaking it. Consequently, the companion device 20 gets a first trigger data 41 from the user 10.

Upon detection of the first trigger data 41, the companion device 20 sends to the voice receiver 30 a start signal 51 that indicates the start of a secured period.

Then, during the secured period, the user emits the voice command 42 which is received by the voice receiver. The voice command 42 aims at activating the specific feature of the voice receiver.

In parallel, (I.e. before, during or after the sending of the voice command) the companion device 20 sends a set of additional signals (A01, ... A0n) to the voice receiver 30. These additional signals are sent during the secured period. As will be detailed after, these additional signals can be conveyed through different types of communication channel. The number of additional signals sent by the companion device 20 depends on the duration of the secured period and a frequency of transmission rule implemented by the companion device 20. For instance, the companion device can be configured to send an additional signal every 3 or 5 seconds as long as the secured period is in progress.

Then, the user triggers the companion device 20 a second time. Consequently, the companion device 20 gets a second trigger data 43 from the user 10.

Upon detection of the second trigger data 43, the companion device 20 sends to the voice receiver 30 an end signal 52 that indicates the end of the secured period.

Upon receipt of the end signal 52, the voice receiver 30 performs a check of the set of received additional signals (A01, ... A0n) and accepts or refuses the voice command 42 according to this check.

In some embodiments, the voice receiver 30 can perform the check of the set of received additional signals based on the number of received additional signals compared to the duration of the secured period, assuming that the voice receiver 30 knows how often the companion device 20 is supposed to emit the additional signals. (case of constant period transmissions)

In some embodiments, the voice receiver 30 can perform the check of the set of received additional signals based on the content of the received additional signals, assuming that the voice receiver 30 knows what value(s) the additional signals are supposed to contain.

In some embodiments, upon receipt of the second trigger data 43, the companion device 20 can generate a signature 55 by using specific data reflecting characteristics intrinsic to the set of additional signals (A01, ... A0n) that has been sent to the voice received 30. Then the companion device 20 can send the signature 55 to the voice receiver along with the end signal 52 or in a separate message. The voice receiver can check the signature 55 as part of the check of the set of additional signals.

For instance, the companion device 20 may generate a random number and emit the series of additional signals in random intervals based on the random number. Then the companion device 20 may compute the signature 55 by using the random intervals. Likewise, the voice receiver can rebuild a witness signature based on the reception intervals observed and compare the received signature 55 with the witness signature.

In some embodiments, the companion device may embed a sound capture unit and listen to the user to record sound level (s) (e.g. L01,...,L0n), and/or sound pitch(s) (e.g. P01,...,P0n), and/or time offsets (e.g. T0, ..., Tn) of additional signals sending from start signal 51 when the user emits the voice command 42. Time offsets may be fixed or may be generated by Companion device 20, it can be certain preset pattern or random time offsets. For instance, the following values can be selected according to the sound level: 2 for high level, 1 for median level and 0 for low level, etc. Then the companion device 20 can generate the signature 55 based on both the sound level(s), and/or sound pitch(s), and/or time offsets and characteristics intrinsic to the set of additional signals A01, ... A0n as presented above with a predefined algorithm. Likewise, the voice receiver can assess the sound level(s) of the voice command 42 (and/or pitch(s) and/or time offset(s)) recorded during the secured period and used this captured data to check the received signature 55.

The companion device can compute the signature 55 by using a conventional hash function like a Secure Hash Algorithm (SHA) or a Message Digest 5 (MD5) function.

In some embodiments, the companion device 20 and the voice receiver 30 have been paired in a previous phase to share a symmetric key or elements of an asymmetric key pair (i.e. public/private keys). The companion device 20 and the voice receiver 30 can use their prestored key to compute and check the signature 55.

As a person skilled in the art can understand, the above-presented embodiments of managing the check operation can be combined.

In some embodiments, the companion device 20 can send both the start signal 51, the set of additional signals (A01, ... A0n) and the end signal 52 through an acoustic channel. Thus, the voice receiver 30 can receive these signals through the same acoustic channel as the one used to receive the voice command. In such a case, the voice receiver 30 is configured to analyze sound it captures to distinguish the received signals from speech.

In some embodiments, the companion device 20 can send to the voice receiver 30 the set of additional signals (A01, ... A0n) in the form of Morse code or any equivalent coding schemes.

Preferably, the companion device 20 can send to the voice receiver 30 the set of additional signals (A01, ... A0n) using a frequency (in Hertz) inaudible to the human ear like 9Hz or 16Hz.

In some embodiments, the companion device 20 can send to the voice receiver 30 the set of additional signals (A01, ... A0n) through a communication channel different from an acoustic channel. For instance, the companion device 20 can send to the voice receiver 30 the start signal, end signal and set of additional signals through a wireless communication channel like Bluetooth, Li-Fi or Wi-Fi.

Once the voice receiver 30 accepts the received voice command 42 (i.e. after a successful check), the voice receiver 30 can either execute the voice command 42 or transfer the voice command 42 to another appliance 61 coupled to the voice receiver 30.

For example, when the voice receiver is a voice assistant, a personal Digital Assistant (PDA), a tablet computer, a laptop or a smartphone, it can execute the voice command 42 to provide the service/action requested by the user 10.

In some embodiments, the voice receiver can transfer the voice command 42 to a coupled apparatus than can execute the voice command 42.

In some embodiments, the voice receiver 30 can identify one or more specific commands by executing the voice command 42 and send said specific command(s) to the coupled apparatus. If the voice receiver is coupled to more than one apparatus, the voice receiver can analyze the type (or content) of voice command or value of some of the additional signals to select the relevant coupled apparatus to send the specific command(s) to.

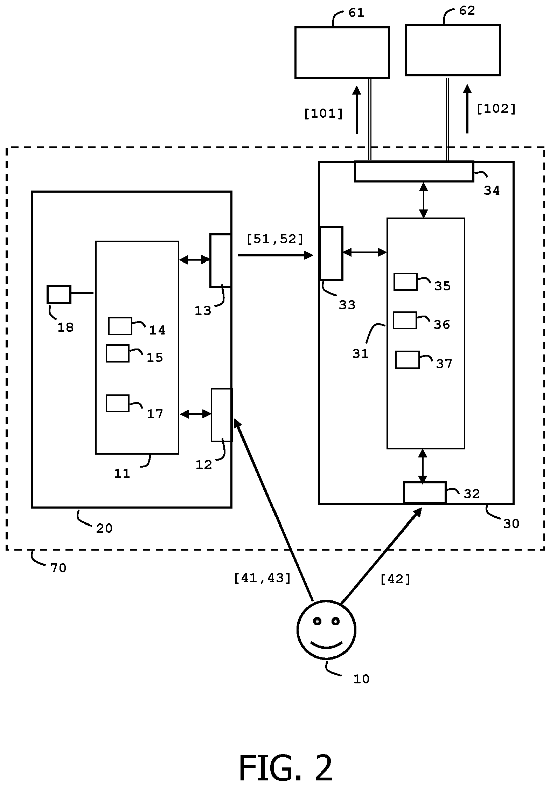

Figure 2 depicts a diagram of architecture of a system 70 for managing a voice command according to an example of the invention.

The system 70 comprises a voice receiver 30 able to receive a voice command 42 emitted by a user 10 through an acoustic channel. The system 70 comprises a companion device 20.

The voice receiver 30 is a hardware appliance comprising a microphone 32, a hardware processor 35, a memory, and program instructions 36 to be executed by the hardware processor for providing services of the voice receiver. The voice receiver 30 comprises a communication interface 33 designed to exchanged data with the companion device 20.

In the example of Figure 2, the voice receiver 30 comprises a secure element 31 hosting the hardware processor 35 and the program instructions 36.

Optionally, as shown at Figure 2, the voice receiver 30 may comprise a communication interface 34 designed to exchanged data with one or more coupled apparatus 61, 62.

The companion device 20 is a hardware device comprising a physical user interface 12, a hardware processor 14, a memory, and program instructions 15 to be executed by the hardware processor for providing services of the companion device. The physical user interface can comprise one or more buttons, a biometric sensor or motion sensor. The companion device 20 comprises an internal energy source 18 (like a battery) and a communication interface 13 designed to exchanged data with the voice receiver 30.

In the example of Figure 2, the companion device 20 comprises a secure element 11 hosting the hardware processor 14 and the program instructions 15. The secure element 11 can be a smart card chip.

The companion device 20 is configured to get a first trigger data 41 and a second trigger data 43 from the user through the physical user interface. For instance, a first press on a button may correspond to the first trigger data 41 while a second press on the same button may correspond to the second trigger data 43.

In some embodiments, the start of a continuous press on a button may correspond to the first trigger data 41 while the release of the button may correspond to the second trigger data 43.

In some embodiments, the button can be replaced by a biometric sensor.

In some embodiments, a press on a first button may correspond to the first trigger data 41 while a press on a second button may correspond to the second trigger data 43.

In some embodiments, the user interface 12 includes a motion sensor that is configured to interpret a first type of movement as the first trigger data 41 and a second type of movement as the second trigger data 43. For instance, the detection of a first shaking by the motion sensor may correspond to the first trigger data 41 while the detection of a second shaking by the motion sensor may correspond to the second trigger data 43. In another example, the motion sensor can be configured to interpret a first three-dimensional movement pattern as the first trigger data 41 and a second three-dimensional movement pattern as the second trigger data 43.

Upon detection of the first trigger data 41, the companion device 20 is configured to send to the voice receiver 30 a start signal 51 indicating a start of a secured period. The start signal 51 can be a preset message or a star command (for example named START_CMD).

Until the secured period is over, the companion device 20 is configured to send to the voice receiver additional signals (A01, ... A0n). Thus, during the secured period, the companion device 20 is configured to send a set of two or more additional signals (A01, ... A0n) through its communication interface 13.

Upon receipt of the second trigger data 43 provided by the user, the companion device 20 is configured to send the end signal 52 to the voice receiver 30 through its communication interface 13. The end signal indicates the end of the secured period.

The voice receiver 30 is configured to temporarily store in its memory the received voice command 42 and the set of additional signals.

Upon receipt of the end signal 52, the voice receiver 30 is configured to perform a check of the set of additional signals (A01, ... A0n), then to accept or refuse the voice command 42 according to the result of the check.

In some embodiments, upon receipt of the second trigger data 43, the companion device can be configured to generate a signature 55 by using specific data reflecting characteristics intrinsic to the set of additional signals (A01, ... A0n) and to send the signature 55 along with the end signal 52. Reciprocally, the voice receiver can be configured to check the received signature 55 when performing the check of the set of additional signals to accept or deny the voice command 42.

The signature computation and signature check can be done in ways like those described at Figure 1.

In some embodiments, the companion device 20 and the voice receiver 30 may have been personalized with specific keys during a previous personalization (or pairing) phase. The companion device 20 can store a preset key 17 and the voice receiver can store a predefined key 37.

In some embodiments, the voice receiver can transfer the voice command 42 to a coupled apparatus 61 than can execute the voice command 42.

In some embodiments, the voice receiver 30 can be configured to identify one or more specific commands 101, 102 by executing the voice command 42 and to send said specific command(s) to a targeted coupled apparatus 61. If the voice receiver is coupled to more than one apparatus, the voice receiver can be configured to analyze the type (or content) of voice command or value of some of the additional signals to select the relevant coupled apparatus to send the specific command(s) to.

The voice receiver 30 can be configured to send the specific command(s) through any relevant communication channel relying on a conventional network system including a private network, the Internet or Telecom network, wired line, Bluetooth^{®}, or Wi-Fi for instance.

The coupled apparatus can be a car, a television, a coffee machine, a house shutter, a private safe, a phone, a computer machine, a home automation appliance, a robot or a weapon for example.

The invention is not limited to the described embodiments or examples. In particular, the described examples and embodiments may be combined.

Thanks to some embodiments of the invention, during a payment transaction, the decision to accept the received voice command can take into account the set of received additional signals to highly limit the possibility of attacks aimed at cheating the voice receiver.

Thanks to some embodiments of the invention, the duration of the whole voice command treatment is reasonable for the user compared to conventional voice systems.

Thanks to some embodiments of the invention, existing infrastructure (namely the apparatus coupled to a voice receiver) can be reused with slight adaptations on the voice receiver side.

## Claims

1. A method for sending a voice command (42) to a voice receiver (30) through an acoustic channel,
wherein the method comprises the following steps:
- a companion device (20) gets a first trigger data (41) from a user (10) of the voice receiver,
- the voice receiver receives a start signal (51) from the companion device, said start signal indicating a start of a secured period,
- the voice receiver receives, through the acoustic channel, the voice command (42) emitted by the user,
- the voice receiver receives a set of additional signals (A01, ... A0n) sent by the companion device during the secured period,
- the companion device receives a second trigger data (43) from the user,
- the voice receiver receives an end signal (52) from the companion device, said end signal being generated by the companion device upon receipt of the second trigger data (43) and indicating an end of the secured period, and
- upon receipt of the end signal (52), the voice receiver performs a check of the set of additional signals (A01, ... A0n) and accepts or refuses the voice command (42) according to said check.

2. The method according to claim 1, wherein the voice receiver is a voice assistant which executes the voice command (42) only if the check is successful.

3. The method according to claim 1, wherein the voice receiver transfers the voice command (42) to a coupled apparatus (61, 62) or identifies a specific command by executing the voice command (42) and sends said specific command to the coupled apparatus (61, 62).

4. The method according to claim 3, wherein the coupled apparatus is a car, a television, a coffee machine, a house shutter, a private safe, a phone, a computer machine, a home automation appliance, a robot or a weapon.

5. The method according to claim 1, wherein upon receipt of the second trigger data (43), the companion device generates a signature (55) by using specific data reflecting characteristics intrinsic to the set of additional signals (A01, ... A0n) and wherein the voice receiver checks the signature (55) when performing the check of the set of additional signals.

6. The method according to claim 5, wherein the companion device captures a sound level of the voice command (42) emitted by the user and generates said signature (55) by using the sound level.

7. The method according to claim 1, wherein the companion device generates a random value, sends the set of additional signals (A01, ... A0n) according to random intervals depending on the random value, and includes the random value in one of the signals sent to the voice receiver and wherein the voice receiver uses the received random value for performing the check of the set of additional signals (A01, ... A0n) .

8. The method according to claim 1, wherein the voice receiver receives the start signal (51), the set of additional signals (A01, ... A0n) and the end signal (52) through the acoustic channel.

9. The method according to claim 8, wherein the voice receiver receives the set of additional signals (A01, ... A0n) in the form of MORSE code.

10. The method according to claim 8 or 9, wherein the voice receiver receives the set of additional signals (A01, ... A0n) through a frequency inaudible to the human ear.

11. The method according to claim 1, wherein the voice receiver receives the start signal (51), the set of additional signals (A01, ... A0n) and the end signal (52) through a Bluetooth or Wi-Fi communication channel.

12. A system (70) comprising a voice receiver (30) able to receive a voice command (42) emitted by a user (10) through an acoustic channel,
wherein the system comprises a companion device (20) configured to get a first trigger data (41) from the user,
said companion device (20) being configured to send to the voice receiver a start signal (51) indicating a start of a secured period,
said companion device (20) being configured to send to the voice receiver a set of additional signals (A01, ... A0n) during the secured period,
said companion device (20) being configured to send an end signal (52) to the voice receiver upon receipt of the second trigger data (43) provided by the user, said end signal indicating an end of the secured period,
upon receipt of the end signal (52), the voice receiver (30) being configured to perform a check of the set of additional signals (A01, ... A0n), and to accept or refuse the voice command (42) according to said check.

13. The system according to claim 12, wherein upon receipt of the second trigger data (43), the companion device is configured to generate a signature (55) by using specific data reflecting characteristics intrinsic to the set of additional signals (A01, ... A0n) and wherein the voice receiver is configured to check the signature (55) when performing the check of the set of additional signals.

14. The system according to claim 12, wherein the companion device (20) embeds a first button used to get the first trigger data (41) from the user and a second button used to get the second trigger data (43).

15. The system according to claim 12, wherein the companion device (20) embeds a motion sensor that is configured to interpret a first type of movement as the first trigger data (41) and a second type of movement as the second trigger data (43).
